# EUROPEAN PATENT APPLICATION

(11) **EP 1 939 914 A2**
(43) Date of publication of application: **02.07.2008**
(21) Application number: 07150424.5
(22) Date of filing: 27.12.2007
(51) Int. Cl.: H01H 71/12, H02H 3/00

(54) **Protection apparatus for air circuit breaker**

(30) Priority: 29.12.2006 KR 20060033017
(71) Applicant: LS Industrial Systems Co., Ltd, Seoul 100-801 (KR)
(72) Inventor: Eom, Jae Pil, Cheongju-si (KR)
(74) Representative: Holmberg, Magnus

(57) **Abstract**

The protection apparatus for air circuit breaker is disclosed, wherein the air circuit breaker is instantly tripped to interrupt the supply of power to the load if a greater level of current is supplied to the load to thereby protect the air circuit breaker and the load against damage, and wherein the current supplied to the load through the air circuit breaker is detected by the voltage detector and converted to a voltage, where the detected voltage is rectified by the rectifier which is compared with the prescribed reference voltage by the comparator to determine whether to trip, and if the tripping is determined by the comparator, the trip coil is driven to trip the air circuit breaker and to prevent the power from being supplied to the load.

## Description

### CROSS-REFERENCE TO RELATED APPLICATION

The present application is based on, and claims priority from, Korean Application Number 20-2006-0033017, filed December 29, 2006, the disclosure of which is incorporated by reference herein in its entirety.

### BACKGROUND

The following description relates generally to a protection apparatus for an air circuit breaker, and more particularly to a protection apparatus for air circuit breaker capable of protecting the air circuit breaker by instantly operating a trip coil to interrupt the supply of an electric power when an accident occurs in the course of supplying the power to a load by the air circuit breaker,

A low voltage air circuit breaker is a breaker for extinguishing an are generated in opening and closing of a contact within the air.

If an accident occurs in the course of the air circuit breaker supplying an electric power to a load, an accident current must be detected, and a trip coil must be operated to interrupt the power in response to the detected accident current.

To this end, the air circuit breaker detects a current supplied to the load, the detected current is converted to a voltage, and a MCU (Micro Controller Unit) determines by the size of the converted voltage whether the accident has occurred. If it is determined that the accident has occurred, the MCU generates a trip signal to interrupt the power to the load by operating the trip coil in response to the generated trip signal.

In other words, if an accident occurs, the MCU operates the trip coil to interrupt the power after a time up to the generation of the trip signal lapses.

### SUMMARY

An object of the instant disclosure is to provide a protection apparatus for air circuit breaker capable of protecting the air circuit breaker and a load against any damage by instantly operating a trip coil to interrupt the supply of an electric power when an accident occurs in the course of the air circuit breaker supplying the power to the load.

The protection apparatus of the air circuit breaker according to the aforementioned concept may detect a current supplied by the air circuit breaker to the load. Preferably, the detection of current covers current detection of all the current on R, S, T and N phases.

Furthermore, the detected current may be converted to a voltage, and rectified by a rectifier and compared with a prescribed reference voltage by a comparator to determine whether to trip the air circuit breaker and a trip signal may be generated to drive a trip coil if it is determined to drive the air circuit breaker,

In one general aspect, a protection apparatus for air circuit breaker may comprise: a voltage detector for detecting a current supplied to a load through the air circuit breaker and for converting the current to a voltage; a rectifier for rectifying the detected voltage of the voltage detector; a comparator for comparing the output voltage of the rectifier with a prescribed reference voltage to determine whether to trip the air circuit breaker; and a trip coil driven in response to the determination by the comparator to trip the air circuit breaker so that an electric power is not supplied by the air circuit breaker to a load.

Implementations of this aspect may include one or more of the following features.

The rectifier comprises a plus cycle rectifier for rectifying a plus cycle voltage from the detected voltage of the rectifier and for outputting the voltage to the comparator and a minus cycle rectifier for rectifying a minus cycle voltage from the detected voltage of the rectifier and for outputting the voltage to the comparator.

The plus cycle rectifier and the minus cycle rectifier respectively rectify the detection voltage on R, S, T and N phases.

The comparator includes two comparators for respectively comparing the rectified plus and minus cycle voltages with a reference voltage, and an OR gate is interposed between the two comparators and the trip coil,

An amplifier for amplifying the output voltage of the rectifier is further interposed between the rectifier and the comparator,

### BRIEF DESCRIPTION OF THE DRAWINGS

A full understanding of the present concept can be gained in detail from the following description of the exemplary implementations that do not limit the instant inventive concept when read in conjunction with the accompanying drawings.

FIG.1 is a circuit diagram illustrating a configuration of a protection apparatus for air circuit breaker according to prior art.

FIG2 is a circuit diagram illustrating a configuration of a protection apparatus for air circuit breaker according to the present concept.

### DETAILED DESCRIPTION

The following paragraphs are nothing but exemplars that explain the principles of the novel concept. As will be recognized by those skilled in the art, the innovative concept described in the present application can be modified and varied over a tremendous range of applications, and accordingly the scope of patented subject matter is not limited by any of the specific exemplary teachings given. For the purpose of clarity, technical material that is known in the technical fields related to the invention has not been described in detail so that the concept is not unnecessarily obscured.

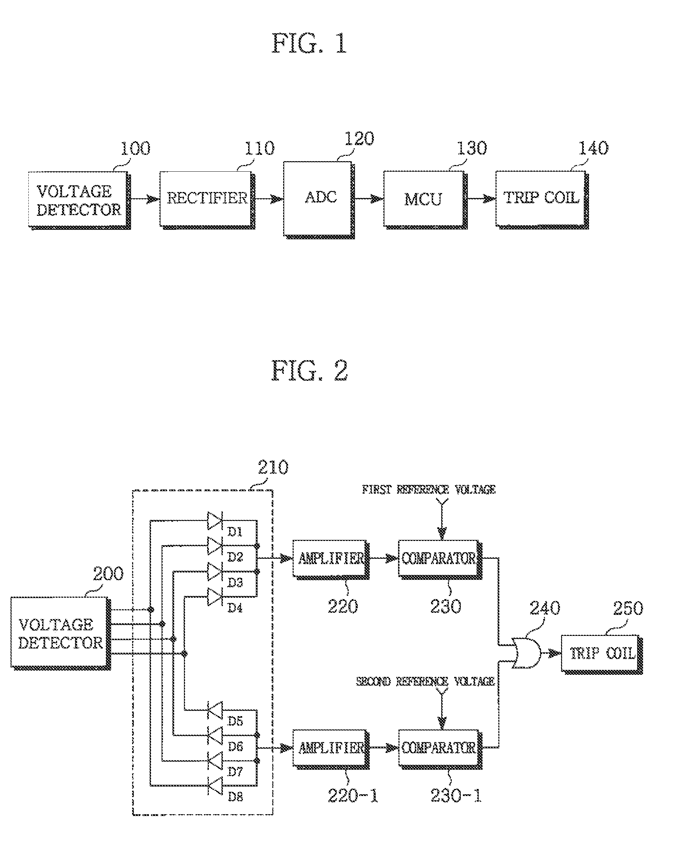

FIG. 1 is a circuit diagram illustrating a configuration of a protection apparatus for air circuit breaker according to prior art, where reference numeral 100 is a current detector. The current detector (100) may include, for instance, a current transformer and a Rogowski coil. The current transformer may detect a current supplied to a load by the air circuit breaker, while the current detected by the current transformer is converted to a voltage by the Rogowski coil.

Reference numeral 110 is a rectifier. The rectifier (110) may include a plurality of diodes. The plurality of diodes may rectify the output, voltage of the voltage detector (100) to convert the rectified voltage to a ripple voltage.

Reference numeral 120 defines an ADC (Analogue to Digital Converter). The ADC (120) may convert the ripple voltage outputted from the rectifier (110) to a digital signal.

Reference numeral 130 is an MCU (Micro Controller Unit). The MCU (130) may determine whether there has occurred an accident by way of level of ripple voltage outputted by the ADC (120) in a digital signal, and generate a trip signal if it is determined that the accident has occurred.

Reference numeral 140 defines a trip coil which may operate when a trip signal is generated by the MCU (130) to trip the air circuit breaker lest that an electric power should be supplied to a load.

In the protection apparatus thus structured, when the air circuit breaker generates an electric power to a load, the voltage detector (100) may detect a current supplied to the load by the air circuit breaker, convert the detected current to a voltage and output the voltage to the rectifier (110). The detected voltage outputted by the voltage detector (100) which is an alternating voltage may be converted to a ripple voltage by the rectifier (110). The converted ripple voltage may be converted to a digital signal by the ADC (120) and inputted to the MCU (130).

The MCU (130) may determine whether there has occurred an accident by the level of ripple voltage inputted from the ADC (120) in a digital signal. In other words, the MCU (130) may determine whether there has occurred an accident through a mathematical operational process such as RMS (Root Mean Square) operation.

As a result of the determination, if it is determined that there has not occurred an accident, the MCU (130) may not generate a trip signal, whereby the trip coil (140) may not be driven to allow the air circuit breaker to continuously supply the power to the load.

As a result of the determination, if it is determined that there has occurred an accident, the MCU (130) may generate a trip signal. The trip coil may be driven by the generated trip signal to trip the air circuit breaker, whereby the air circuit breaker may interrupt, the power that has been supplied to the load, such that the air circuit breaker and the load may not be damaged by the accident current to prevent the accident that has occurred from being propagated.

The protective apparatus may operate in such a fashion that the MCU determines that there is an accident to generate a trip signal and to drive a trip coil if the accident has occurred. In other words, the MCU may determine the occurrence of the accident to operate the trip coil and to interrupt the supply of power after a time up to the occurrence of the trip signal is delayed.

Even in a case where a large level of current such as a short-circuit current caused by a short-circuit, accident that may inflict a damage to the air circuit breaker is supplied to a load via the air circuit breaker, the trip coil is driven from start of the accident occurrence to the interruption of power to delay a prescribed time, and the air circuit breaker keeps supplying the power to the load during the delayed prescribed time to damage the air circuit breaker and the load to which the air circuit breaker supplies the power. Therefore, it is essential that the air circuit breaker be instantly tripped to interrupt the supply of power if an accident occurs.

FIG.2 is a circuit diagram illustrating a configuration of a protection apparatus for air circuit breaker according to the present concept, where the protection apparatus includes a voltage detector (200), a rectifier (210), amplifiers (220, 220-1), comparators (230, 230-1), an OR gate (240) and a trip coil (250).

The voltage detector (200) may include, for instance, a current transformer and a Rogowski coil. The current transformer may detect a current supplied to a load by the air circuit breaker, and the current detected by the current transformer is converted to a voltage by the Rogowski coil and outputted.

The rectifier (210) may include a plurality of diodes (D1~D8). The four diodes (D1∼D4) may rectify a plus cycle voltage from the detected voltages on R, S, T and N phases detected by the voltage detector (200) to output a ripple voltage. The four diodes (D5~D8) may rectify a minus cycle voltage from the detected voltages on R, S, T and N phases detected by the voltage detector (200) to output a ripple voltage,

The amplifiers (220, 220-1) may respectively amplify the plus ripple voltage and the minus ripple voltage rectified by the rectifier (210).

The comparators (230, 230-1) may compare the output voltages of the amplifiers (220, 220-1) with first and second prescribed reference voltages, and if the output voltages of the amplifiers (220, 220-1) is higher than the first and second reference voltages as a result of the comparison, a high voltage signal may be generated.

The OR gate (240) may logic-sum an output potential of the comparators (230, 230-1) and output to the trip coil (250), The trip coil (250) may be operated to trip the air circuit breaker lest that the power should be supplied to the load if the OR gate (240) outputs a high voltage signal.

In the protection apparatus thus constructed, when the air circuit breaker supplies the power to the load, the voltage detector (200) may detect the current flowing in the R, S, T and N phase power lines, convert the detected current to voltage and output the detected voltage to the rectifier (210).

The detected voltage is an alternating current voltage, and the plus cycle voltage of the detected voltage may be rectified by the four diodes (D1~D4) to be converted to plus ripple voltages, and the minus cycle voltage of the detected voltage may be rectified by the four diodes (D5~D8) to be converted to minus ripple voltages.

The plus ripple voltages and the minus ripple voltages converted by the rectifier 9210) may be respectively amplified by the amplifiers (220, 220-1) and inputted to the comparators (230, 230-1). The comparators ( 230, 230-1) may compare the plus and minus ripple voltages respectively amplified by the amplifiers (220, 220-1) with the prescribed first and second reference voltages.

As a result of the comparison, if the plus and minus ripple voltages respectively amplified by the amplifiers (220, 220-1) are lower than the prescribed first and second reference voltages, the comparators (230, 230-1) may output a low voltage signal.

In doing so, the OR gate may output a low voltage signal to be applied to the trip coil (250) and to make the trip coil (250) inoperable, whereby the air circuit breaker can keep supplying the power to the load.

As a result of the comparison, if the plus ripple voltage is higher than the prescribed first reference voltage, the comparator (230) may output a high voltage signal, and the minus ripple voltage is higher than the prescribed second reference voltage, the comparator (230-1) may output a high voltage signal.

If the comparator (230) or the comparator (230-1) outputs a high voltage signal, the OR gate (240) may outputs a high voltage signal to be applied to the trip coil (250), whereby the trip coil (250) is driven to interrupt the supply of power to the load,
Herein, the exemplary implementation has described an approach where the air circuit breaker is tripped if a current higher than the short-circuited current is supplied to the load. The above-mentioned implementation of the present concept is not limited thereto, but it should be noted that many other variations may be implemented including an approach where the protection apparatus may be simply applied to various air circuit breakers for supplying power to the load to trip the air circuit breakers if a current greater than the short-circuited current is supplied to the load.

The protection apparatus for air circuit breaker according to the instant inventive concept is operated in such a manner that the trip coil is instantly operated to trip the air circuit breaker and to prevent the power from being supplied to the load if an accident current having a level greater than, for example, that of the short-circuited current,

Furthermore, if the protection apparatus is coupled to the prior art for tripping an air circuit breaker by an MCU determining the occurrence of accident current, the air circuit breaker and the load may be completely protected against the damage by the accident current.

As the present concept may be implemented in several forms without departing from the spirit or essential characteristics thereof, it should also be understood that the above-described implementation is not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A protection apparatus for air circuit breaker comprising: a voltage detector for detecting a current supplied to a load through the air circuit breaker and for converting the current to a voltage; a rectifier for rectifying the detected voltage of the voltage detector; a comparator for comparing the output voltage of the rectifier with a prescribed reference voltage to determine whether to trip the air circuit breaker; and a trip coil driven in response to the determination by the comparator to trip the air circuit breaker.

2. The protection apparatus as claimed in claim 1, wherein the rectifier comprises:
a plus cycle rectifier for rectifying a plus cycle voltage from the detected voltage of the rectifier and for outputting the voltage to the comparator; and a minus cycle rectifier for rectifying a minus cycle voltage from the detected voltage of the rectifier and for outputting the voltage to the comparator.

3. The protection apparatus as claimed in claim 2, wherein the plus cycle rectifier and the minus cycle rectifier respectively rectify the detected plus cycle and minus cycle detected voltages on R, S, T and N phases.

4. The protection apparatus as claimed in claim 1, wherein the comparator comprises two comparators for respectively comparing the rectified plus and minus cycle detected voltages with a reference voltage.

5. The protection apparatus as claimed in claim 4, further comprising an OR gate for tripping the trip coil if any one comparator of the two comparators is determined to trip.

6. The protection apparatus as claimed in claim 1, further comprising an amplifier for amplifying the output voltage of the rectifier.
